# EUROPEAN PATENT APPLICATION

(11) **EP 4 644 504 A1**
(43) Date of publication of application: **05.11.2025**
(21) Application number: 23911835.9
(22) Date of filing: 18.12.2023
(51) Int. Cl.: C09J 7/38, C09J 7/26, C09J 153/02

(54) **ADHESIVE SHEET**

(30) Priority: 28.12.2022 JP 2022211983
(71) Applicant: NITTO DENKO CORPORATION, Ibaraki-shi Osaka 567-8680 (JP)
(72) Inventor: KAMAYA, Yusuke, Ibaraki-shi, Osaka 567-8680 (JP); UKEI, Hiroichi, Ibaraki-shi, Osaka 567-8680 (JP); SUZUKI, Hideyuki, Ibaraki-shi, Osaka 567-8680 (JP); IWASE, Takayuki, Ibaraki-shi, Osaka 567-8680 (JP)
(74) Representative: Müller-Boré & Partner Patentanwälte PartG mbB
(86) International application number: PCT/JP2023/045386
(87) International publication number: WO 2024/143055

(57) **Abstract**

A pressure-sensitive adhesive sheet 1a includes a pressure-sensitive adhesive layer 11. The pressure-sensitive adhesive layer 11 includes an elastomer and a tackifier. The elastomer includes 25% or more styrene on a mass basis. The tackifier has a softening point of 100°C or higher. A ratio R_{ET} of a content of the tackifier to a content of the elastomer in the pressure-sensitive adhesive layer 11 is 0.1 to 0.8. The pressure-sensitive adhesive sheet 1a satisfies a requirement that a tensile force F_{A} [N/20 mm] is greater than an adhesive force F_{B} [N/20 mm]. The pressure-sensitive adhesive sheet 1a has an adhesive force Fc of not less than 1.0 N/20 mm. The adhesive force F_{B} is a 90° peel adhesive force [N/20 mm] measured after adhering a test piece prepared from the pressure-sensitive adhesive sheet 1a to a testing plate and maintaining an environment temperature of the adhered test piece at 100°C for seven days.

## Description

### TECHNICAL FIELD

The present invention relates to a pressure-sensitive adhesive sheet.

### BACKGROUND ART

Pressure-sensitive adhesive sheets designed to be peeled from an adherend after adhered thereto have been known.

For example, Patent Literature 1 describes a pressure-sensitive adhesive strip detachable by extensive stretching substantially on a bonding surface without leaving a residue or causing damage. This pressure-sensitive adhesive strip includes at least one adhesive layer foamed with microballoons and at least one carrier B. A pressure-sensitive adhesive A forming the adhesive layer includes: an elastomer part (a1) containing at least one polyvinylaromatic-polydiene block copolymer as a base; and a given pressure-sensitive adhesive resin part (a2). The pressure-sensitive adhesive A optionally includes a softening resin part (a3).

Patent Literature 2 describes an adhesive mounting assembly capable of being attached or adhered to a surface and removable from the surface without damaging the surface. This adhesive mounting assembly includes a backing, a first adhesive region, a second adhesive region, a non-adhesive region, and a mounting device. The first adhesive region and the second adhesive region are on a first principle plane surface of the backing. The non-adhesive region is disposed, for example, between the first adhesive region and the second adhesive region. The mounting device is adjacent to the backing. The non-adhesive region is, for example, adjacent to the mounting device.

### CITATION LIST

### Patent Literature

Patent Literature 1: JP 2018-138649 A
Patent Literature 2: JP 2019-534059 A

### SUMMARY OF INVENTION

### Technical Problem

As for the techniques described in Patent Literatures 1 and 2, it is not assumed that pressure-sensitive adhesive sheets adhered to an adherend can be exposed to a high-temperature environment for a long period of time, and the techniques described in Patent Literatures 1 and 2 have room for reconsideration in terms of peeling after exposure to a high-temperature environment for a long period of time. Moreover, an initial adhesive force of a pressure-sensitive adhesive sheet is also important for fixing a member.

Therefore, the present invention provides a pressure-sensitive adhesive sheet advantageous in terms of achieving a given adhesive force to an adherend from an initial period and being peeled from an adherend after exposure to a high-temperature environment for a long period of time.

### Solution to Problem

The present invention provides a pressure-sensitive adhesive sheet including
a pressure-sensitive adhesive layer including: an elastomer including 25% or more styrene on a mass basis; and a tackifier having a softening point of 100°C or higher, wherein
a ratio of a content of the tackifier to a content of the elastomer in the pressure-sensitive adhesive layer is 0.1 to 0.8 on a mass basis,
the pressure-sensitive adhesive sheet satisfies a requirement that a tensile force F_{A} [N/20 mm] is greater than an adhesive force F_{B} [N/20 mm],
the tensile force F_{A} is expressed as F₁·t_{A}·20/S₁, where F₁ is a maximum test force measured in a tensile test of a test piece prepared from the pressure-sensitive adhesive sheet, S₁ [mm²] is a cross-sectional area of the test piece, and t_{A} [mm] is a thickness of the pressure-sensitive adhesive sheet,
the pressure-sensitive adhesive sheet has an adhesive force Fc of not less than 1.0 N/20 mm,
the test piece for the tensile test has a shape of a rectangle having a width of 10 mm and a length of 40 mm in plan view,
a chuck-to-chuck distance in the tensile test is 10 mm,
a test speed in the tensile test is 1000 mm/min,
the adhesive force F_{B} is a 90° peel adhesive force [N/20 mm] measured according to Japanese Industrial Standards (JIS) Z 0237: 2022 by adhering a test piece prepared from the pressure-sensitive adhesive sheet to a testing plate, maintaining an environment temperature of the adhered test piece at 100°C for seven days, and then peeling the test piece from the testing plate, and
the adhesive force Fc is a 90° peel adhesive force [N/20 mm] measured according to Japanese Industrial Standards (JIS) Z 0237: 2022 by adhering a test piece prepared from the pressure-sensitive adhesive sheet to a testing plate and peeling the pressure-sensitive adhesive sheet from the testing plate within one minute after the adhesion.

### Advantageous Effects of Invention

The above pressure-sensitive adhesive sheet is advantageous in terms of achieving a given adhesive force to an adherend from an initial period and being peeled from an adherend after exposure to a high-temperature environment for a long period of time.

### BRIEF DESCRIPTION OF DRAWINGS

FIG. 1 is a cross-sectional view schematically showing an example of the pressure-sensitive adhesive sheet according to the present invention.
FIG. 2 is a cross-sectional view schematically showing a usage example of the pressure-sensitive adhesive sheet.
FIG. 3 is a cross-sectional view schematically showing another example of the pressure-sensitive adhesive sheet.

### DESCRIPTION OF EMBODIMENTS

Hereinafter, embodiments of the present invention will be described with reference to the drawings. The present invention is not limited to the following embodiments.

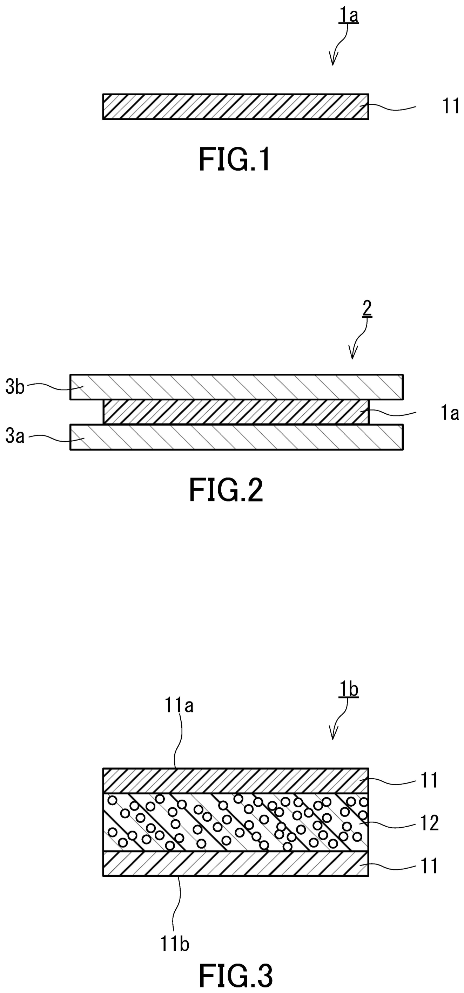

As shown in FIG. 1, a pressure-sensitive adhesive sheet 1a includes a pressure-sensitive adhesive layer 11. The pressure-sensitive adhesive sheet 1a has, for example, a single-layer structure, and includes the pressure-sensitive adhesive layer 11 only. The pressure-sensitive adhesive layer 11 includes an elastomer and an tackifier. The elastomer includes 25% or more styrene on a mass basis. A content of the styrene included in the elastomer can be determined, for example, by structural analysis of the elastomer by carbon-13 nuclear magnetic resonance (¹³CNMR). The tackifier has a softening point of 100°C or higher. The softening point of the tackifier can be determined, for example, by the ring and ball method. A ratio R_{ET} of a content of the tackifier to a content of the elastomer in the pressure-sensitive adhesive layer 11 is 0.1 to 0.8. The pressure-sensitive adhesive sheet 1a satisfies a requirement that a tensile force F_{A} [N/20 mm] is greater than an adhesive force F_{B} [N/20 mm]. The tensile force F_{A} is expressed as F₁·t_{A}·20/S₁, where a maximum test force F₁ measured in a tensile test of a test piece prepared from the pressure-sensitive adhesive sheet 1a, a cross-sectional area S₁ [mm²] of the test piece, and a thickness t_{A} [mm] of the pressure-sensitive adhesive sheet 1a. The test piece for the tensile test has a shape of a rectangle having a width of 10 mm and a length of 40 mm in plan view. A chuck-to-chuck distance in the tensile test is 10 mm. A test speed in the tensile test is 1000 mm/min. The tensile test is performed, for example, according to Japanese Industrial Standards (JIS) K 6251, unless otherwise described. The adhesive force F_{B} is a 90° peel adhesive force [N/20 mm] measured according to JIS Z 0237: 2022 by adhering a test piece prepared from the pressure-sensitive adhesive sheet 1a to a testing plate, maintaining an environmental temperature of the test piece at 100°C for seven days, and then peeling the test piece from the testing plate. In addition, the pressure-sensitive adhesive sheet 1a has an adhesive force Fc of not less than 1.0 N/20 mm. The adhesive force Fc is a 90° peel adhesive force [N/20 mm] measured according to JIS Z 0237: 2022 by adhering a test piece prepared from the pressure-sensitive adhesive sheet 1a to a testing plate and peeling the pressure-sensitive adhesive sheet 1a from the testing plate within one minute after the adhesion.

As shown in FIG. 2, a bonded structure 2 can be provided using the pressure-sensitive adhesive sheet 1a. For example, the pressure-sensitive adhesive sheet 1a is sandwiched between adherends 3a and 3b and is joined to the adherends 3a and 3b under pressure to give the bonded structure 2. The bonded structure 2 can be exposed to a high-temperature (e.g., 100°C or higher) environment for a long period of time (e.g., 168 hours or longer). Additionally, the pressure-sensitive adhesive sheet 1a can be peeled and collected from the adherends 3a and 3b after the bonded structure 2 is used. This facilitates recycling of the adherends 3a and 3b, and is also desirable in terms of environmental protection.

According to studies by the present inventors, in the case where an adherend bonded to a pressure-sensitive adhesive sheet is exposed to a high-temperature environment for a long period of time, the pressure-sensitive adhesive sheet is likely to rupture when being peeled from the adherend, and thus collection by peeling the pressure-sensitive adhesive sheet can be troublesome. Additionally, the pressure-sensitive adhesive or the like of the pressure-sensitive adhesive sheet tends to remain on the adherend, and the pressure-sensitive adhesive or the like remaining on the adherend may hinder recycling of the adherend. Meanwhile, it is also important for pressure-sensitive adhesive sheets to exhibit a given adhesive force for a long period of time or in a high-temperature environment while adhered to an adherend.

The pressure-sensitive adhesive sheet 1a can exhibit the desired adhesive forces to an adherend owing to an organic connection between the following characteristics (a), (b), and (c) and can satisfy the requirement that the tensile force F_{A} is greater than the adhesive force F_{B}. As a result, when peeled from the adherend after exposure to a high-temperature environment for a long period of time, the pressure-sensitive adhesive sheet 1a is less likely to rupture and the pressure-sensitive adhesive or the like of the pressure-sensitive adhesive sheet 1a is less likely to remain on the adherend. Therefore, it is easy to collect the pressure-sensitive adhesive sheet 1a.
(a) The elastomer included in the pressure-sensitive adhesive layer 11 includes 25% or more styrene on a mass basis.
(b) The tackifier included in the pressure-sensitive adhesive layer 11 has a softening point of 100°C or higher.
(c) The ratio R_{ET} is 0.1 to 0.8.

In addition, since the pressure-sensitive adhesive sheet 1a has an adhesive force Fc of not less than 1.0 N/20 mm, the pressure-sensitive adhesive sheet 1a can exhibit the given adhesive force immediately after adhered to an adherend.

Since the elastomer included in the pressure-sensitive adhesive layer 11 includes 25% or more styrene on a mass basis, the pressure-sensitive adhesive layer 11 is likely to have a high tensile strength. Because of this, when peeled from an adherend after exposure to a high-temperature environment for a long period of time, the pressure-sensitive adhesive sheet 1a is less likely to rupture and is easily collected.

The content of the styrene in the elastomer included in the pressure-sensitive adhesive layer 11 may be 30% or more, 35% or more, or 40% or more on a mass basis. The content of the styrene is, for example, 70% or less, and may be 60% or less, or 50% or less.

Since the tackifier included in the pressure-sensitive adhesive layer 11 has a softening point of 100°C or higher, even if the pressure-sensitive adhesive sheet 1a bonded to an adherend is exposed to a high-temperature environment for a long period of time, an excessive increase of the adhesive force of the pressure-sensitive adhesive layer 11 relative to the tensile strength of the pressure-sensitive adhesive sheet 1a is likely to be suppressed. Because of this, when peeled from an adherend after exposure to a high-temperature environment for a long period of time, the pressure-sensitive adhesive or the like of the pressure-sensitive adhesive sheet 1a is less likely to remain on an adherend.

The softening point of the tackifier may be 105°C or higher, or 110°C or higher. The softening point of the tackifier is, for example, 160°C or lower, and may be 150°C or lower, or 140° or lower.

Since the ratio R_{ET} is 0.1 or more, the pressure-sensitive adhesive sheet 1a is likely to have the desired adhesive forces to an adherend. Additionally, since the ratio R_{ET} is 0.8 or less, even if the pressure-sensitive adhesive sheet 1a bonded to an adherend is exposed to a high-temperature environment for a long period of time, an excessive increase of the adhesive force of the pressure-sensitive adhesive layer 11 is likely to be suppressed. Because of this, when peeled from an adherend after exposure to a high-temperature environment for a long period of time, the pressure-sensitive adhesive or the like of the pressure-sensitive adhesive sheet 1a is less likely to remain on an adherend.

The ratio R_{ET} may be 0.15 or more, 0.2 or more, or 0.25 or more. The ratio R_{ET} may be 0.75 or less, or 0.7 or less. The ratio R_{ET} may be within a range defined by the lower limit being one value selected from the group consisting of 0.1, 0.15, 0.2, and 0.25 and the upper limit being one value selected from the group consisting of 0.8, 0.75, and 0.7.

The tensile force F_{A} is not limited to a particular value as long as the tensile force F_{A} is greater than the adhesive force F_{B}. The tensile force F_{A} is, for example, not less than 10 [N/20 mm]. In this case, when peeled from an adherend after exposure to a high-temperature environment for a long period of time, the pressure-sensitive adhesive sheet 1a is even less likely to rupture.

The tensile force F_{A} may be not less than 15 [N/20 mm], not less than 20 [N/20 mm], not less than 25 [N/20 mm], not less than 30 [N/20 mm], not less than 35 [N/20 mm], or not less than 40 [N/20 mm]. The tensile force F_{A} is, for example, not more than 100 [N/20 mm], and may be not more than 90 [N/20 mm], or not more than 80 [N/20 mm].

The adhesive force F_{B} is not limited to a particular value as long as the tensile force F_{A} is greater than the adhesive force F_{B}. The adhesive force F_{B} is, for example, not less than 5 [N/20 mm], and may be not less than 10 [N/20 mm], not less than 15 [N/20 mm], not less than 20 [N/20 mm], or not less than 25 [N/20 mm]. The adhesive force F_{B} is, for example, not more than 80 [N/20 mm], and may be not more than 75 [N/20 mm], or not more than 70 [N/20 mm].

The adhesive force Fc may be not less than 2 N/20 mm, not less than 5 N/20 mm, or not less than 10 N/20 mm. The adhesive force Fc is, for example, not more than 80 [N/20 mm], or may be not more than 70 [N/20 mm], or not more than 60 [N/20 mm].

In the pressure-sensitive adhesive layer 11, a difference D obtained by subtracting an SP value of the tackifier from an SP value of the elastomer is not limited to a particular value. The pressure-sensitive adhesive layer 11 satisfies, for example, a requirement -5.0 MPa^{0.5} ≤ D ≤ 1.5 MPa^{0.5}. Because of this, the elastomer and the tackifier are highly compatible with each other in the pressure-sensitive adhesive layer 11, and the pressure-sensitive adhesive sheet 1a is more likely to have the desired adhesive forces to an adherend. The SP values are Hildebrand SP values. For example, the SP value of the elastomer and the SP value of the tackifier can be estimated using a calculation software Hansen Solubility Parameters in Practice (HSPiP). In calculation using HSPiP, molecular structures are input in SMILES format. For example, SP values of the elastomer and the tackifier are calculated on the basis of compositions of structural units of styrene, etc.

The SP value of the elastomer is, for example, 15 to 20 MPa^{0.5}, and may be 16 to 20 MPa^{0.5}, or 17 to 19 MPa^{0.5}.

The SP value of the tackifier is, for example, 17 to 21 MPa^{0.5}, and may be 18 to 21 MPa^{0.5}.

In the pressure-sensitive adhesive layer 11, the difference D may be -4.5 MPa^{0.5} or more, -4.0 MPa^{0.5} or more, -3.5 MPa^{0.5} or more, -3.0 MPa^{0.5} or more, -2.5 MPa^{0.5} or more, or -2.0 MPa^{0.5} or more. The difference D may be 1.5 MPa^{0.5} or less, 1.0 MPa^{0.5} or less, 0.5 MPa^{0.5} or less, 0 MPa^{0.5} or less, -0.5 MPa^{0.5} or less, or -1.0 MPa^{0.5} or less.

The tensile strength of the elastomer included in the pressure-sensitive adhesive layer 11 is not limited to a particular value. The tensile strength is, for example, 10 MPa or more. Because of this, the tensile force F_{A} is likely to increase, and when peeled from an adherend after exposure to a high-temperature environment for a long period of time, the pressure-sensitive adhesive sheet 1a is even less likely to rupture.

The tensile strength of the elastomer may be 15 MPa or more, or 20 MPa or more. The tensile strength of the elastomer included in the pressure-sensitive adhesive layer 11 is, for example, 50 MPa or less, and may be 45 MPa or less, or 40 MPa or less.

The elastomer included in the pressure-sensitive adhesive layer 11 is, for example, a styrene block copolymer. Examples of the styrene block copolymer include a styrene butadiene block copolymer, a styrene-butadiene-styrene block copolymer, a styrene-isoprene-styrene block copolymer, a styrene-ethylene-butadiene block copolymer, a styrene-ethylene-butylene-styrene block copolymer, a styrene-isobutylene-styrene block copolymer, and a styrene-isoprene-propylene-styrene block copolymer.

The tackifier is not limited to a particular substance as long as the tackifier has a softening point of 100°C or higher. The tackifier is, for example, a given resin. Examples of the resin include a rosin-based tackifying resin, a terpene-based tackifying resin, a hydrocarbon-based tackifying resin, a phenol-based tackifying resin, a ketone-based tackifying resin, a polyamide-based tackifying resin, an epoxy-based tackifying resin, and an elastomer-based tackifying resin. Examples of the rosin-based tackifying resins include unmodified rosins, modified rosins, rosin modified phenolic resins, and rosin ester resins. Examples of the terpene-based tackifying resin include terpene resins, terpene phenolic resins, styrene-modified terpene resins, aromatic modified terpene resins, and hydrogenated terpene resins. Examples of the hydrocarbon-based tackifying resin include aliphatic hydrocarbon resins, aliphatic cyclic hydrocarbon resins, aromatic hydrocarbon resins, aliphatic-aromatic petroleum resins, aliphatic and alicyclic petroleum resins, hydrogenated hydrocarbon resins, coumarone resins, and coumarone-indene resins. Examples of the aromatic hydrocarbon resin include styrene resins and xylene resins. Examples of the phenol-based tackifying resin include alkylphenol resins, xylene formaldehyde resins, resol, and novolac. The tackifier is desirably an alicyclic hydrocarbon resin or an aromatic hydrocarbon resin.

The thickness of the pressure-sensitive adhesive layer 11 is not limited to a particular value. The pressure-sensitive adhesive layer 11 has a thickness of, for example, 30 to 500 µm. The thickness of the pressure-sensitive adhesive layer 11 may be 50 µm or more, or 75 µm or more. The thickness of the pressure-sensitive adhesive layer 11 may be 400 µm or less, or 350 µm or less.

The pressure-sensitive adhesive layer 11 may include a filler. In this case, the tack of the pressure-sensitive adhesive layer 11 is likely to be adjusted in a desired range. The material of the filler is not limited to a particular material. The filler includes, for example, an inorganic substance. Examples of the inorganic substance include calcium carbonate, magnesium carbonate, clay, talc, mica, bentonite, silica, alumina, aluminum silicate, and aluminum. The pressure-sensitive adhesive layer 11 may be free of the filler.

The content of the filler in the pressure-sensitive adhesive layer 11 is not limited to a particular value. A ratio of the content of the filler to the content of the above elastomer in the pressure-sensitive adhesive layer 11 is, for example, 0.05 or more on a mass basis, and may be 0.1 or more, or 0.2 or more on a mass basis. This ratio is, for example, 3 or less, and may be 2.5 or less, 2 or less, 1.5 or less, 1 or less, or 0.5 or less.

The pressure-sensitive adhesive sheet 1a can be modified in various respects. For example, the pressure-sensitive adhesive sheet 1a may be configured as a pressure-sensitive adhesive sheet 1b shown in FIG. 3. The pressure-sensitive adhesive sheet 1b is configured in the same manner as the pressure-sensitive adhesive sheet 1a, unless otherwise described. The components of the pressure-sensitive adhesive sheet 1b that correspond to the components of the pressure-sensitive adhesive sheet 1a are denoted by the same reference characters, and detailed descriptions of such components are omitted. The description given for the pressure-sensitive adhesive sheet 1a applies to the pressure-sensitive adhesive sheet 1b, unless there is technical inconsistency.

As shown in FIG. 3, the pressure-sensitive adhesive sheet 1b includes a substrate 12 being a foamed body, and the pressure-sensitive adhesive layer 11 is disposed on the substrate 12. With this configuration, the substrate 12 being a foamed body easily deforms to conform to an adherend, and even when adherends are relatively far from each other, the pressure-sensitive adhesive sheet 1b easily fill a space between the adherends.

The pressure-sensitive adhesive sheet 1b includes, for example, a pair of the pressure-sensitive adhesive layers 11, and the substrate 12 is disposed between the pressure-sensitive adhesive layers 11. The pair of pressure-sensitive adhesive layers 11 form a first surface 11a and a second surface 11b, which are surfaces in a thickness direction, of the pressure-sensitive adhesive sheet 1b. The pressure-sensitive adhesive sheet 1b may be modified to have one pressure-sensitive adhesive layer in contact with one principal surface of the substrate 12.

The substrate 12 may have, for example, a closed-cell structure, an open-cell structure, or a semi-closed and semi-open cell structure. When the substrate 12 has a semi-closed and semi-open cell structure, the substrate 12 includes open cells before compressive deformation, and, for example, when the substrate 12 undergoes compressive deformation with a compressive strain of 50% or more, the structure of the substrate 12 changes to a structure that is similar to a closed-cell structure and in which an open-cell portion is blocked.

The material of the substrate 12 is not limited to a particular material. The substrate 12 may be, for example, a rubber foamed body, a urethane foam, a silicone foam, or an acrylic foam.

When the substrate 12 is a rubber foamed body, the rubber may be an olefin-based elastomer, a styrene-based elastomer, a butyl-based elastomer, a vinyl chloride-based elastomer, or natural rubber. Examples of the olefin-based elastomer include ethylene-propylene rubber (EPM) and ethylene-propylene-diene rubber (EPDM). Examples of the styrene-based elastomer include styrene-butadiene rubber (SBR), styrene-butadiene-styrene rubber (SBS), styrene-isoprene-styrene rubber (SIS), styrene-ethylene-butadiene rubber, styrene-ethylene-butylene-styrene rubber (SEBS), styrene-isobutylene-styrene block rubber (SIBS), and styrene-isoprene-propylene-styrene rubber. Examples of the butyl-based elastomer include butyl rubber, polyisobutylene rubber, polybutene, polyisoprene rubber, and nitrile butadiene rubber (NBR). Examples of the vinyl chloride-based elastomer include chloroprene rubber and chlorosulfonated polyethylene rubber.

The thickness of the substrate 12 is not limited to a particular value. The thickness of the substrate 12 is, for example, 0.5 to 40 mm, and may be 1 to 40 mm, 1 to 30 mm, 1 mm to 20 mm, or 2 to 20 mm.

### EXAMPLES

The present invention will be described hereinafter in more details by examples. The present invention is not limited to the examples given below.

### <Example 1>

An SBS resin D1155 manufactured by Kraton Corporation and a tackifier ARKON M-115 manufactured by ARAKAWA CHEMICAL INDUSTRIES, LTD. were kneaded in a ratio of 100 parts by mass and 35 parts by mass to give a mixture. This mixture was hot-pressed at 150°C and 4 MPa to give a pressure-sensitive adhesive sheet according to Example 1 having a thickness of 100 µm. The content of styrene in SBS resin D1155 was 40 mass%. The softening point measured for ARKON M-115 by the ring and ball method was 115°C.

### <Examples 2 and 3>

Pressure-sensitive adhesive sheets according to Examples 2 and 3 were obtained in the same manner as in Example 1, except that the amount of the tackifier added was changed to 10 parts by mass and 50 parts by mass, respectively.

### <Example 4>

A pressure-sensitive adhesive sheet according to Example 4 was obtained in the same manner as in Example 1, except that an SBS resin Tufprene A manufactured by Asahi Kasei Corporation was used instead of the SBS resin D1155. Tufprene is a registered trademark. The pressure-sensitive adhesive sheet according to Example 4 had a thickness of 300 µm. The content of styrene in Tufprene A was 40 mass%.

### <Example 5>

A pressure-sensitive adhesive sheet according to Example 5 was obtained in the same manner as in Example 1, except that an SBS resin TR-2003 manufactured by ENEOS Materials Corporation was used instead of the SBS resin D1155. The pressure-sensitive adhesive sheet according to Example 5 had a thickness of 100 µm. The content of styrene in TR-2003 was 43 mass%.

### <Example 6>

An SBS resin TR-2003 manufactured by ENEOS Materials Corporation, a tackifier ARKON M-115 manufactured by ARAKAWA CHEMICAL INDUSTRIES, LTD., and a filler being ground calcium carbonate manufactured by MARUO CALCIUM CO., LTD. were kneaded in a ratio of 100 parts by mass, 40 parts by mass, and 35 parts by mass to give a mixture. This mixture was hot-pressed at 150°C and 4 MPa to give a pressure-sensitive adhesive sheet according to Example 6 having a thickness of 100 µm.

### <Example 7>

A pressure-sensitive adhesive sheet was obtained in the same manner as in Example 1. The pressure-sensitive adhesive sheet was adhered to one principal surface of a foamed body EE-1000 manufactured by Nitto Denko Corporation to give a layered body. The foamed body EE-1000 was a foamed EPDM body, and had an open-cell structure. The foamed body EE-1000 had a thickness of 5 mm. A pressure of 2 kPa was applied to the layered body for five minutes in an oven kept at 140°C to adhere the pressure-sensitive adhesive sheet and the foamed body together. A pressure-sensitive adhesive sheet according to Example 7 was obtained in this manner.

### <Example 8>

A pressure-sensitive adhesive sheet according to Example 8 was obtained in the same manner as in Example 7, except that Super Sheet H being a urethane foam manufactured by NHK SPRING CO., LTD. was used instead of the foamed body EE-1000.

### <Example 9>

A pressure-sensitive adhesive sheet according to Example 9 was obtained in the same manner as in Example 7, except that TE800H being a silicone foam manufactured by ZHEJIANG TIANYI NEW MATERIAL CO., LTD. was used instead of the foamed body EE-1000.

### <Example 10>

A pressure-sensitive adhesive sheet according to Example 10 was obtained in the same manner as in Example 7, except that HYPERJOINT H7012 being an acrylic foam manufactured by Nitto Denko Corporation was used instead of the foamed body EE-1000. HYPERJOINT is a registered trademark.

### <Example 11>

A pressure-sensitive adhesive sheet according to Example 11 was obtained in the same manner as in Example 1, except that the amount of the tackifier added was changed to 70 parts by mass and that the thickness of the pressure-sensitive adhesive sheet was adjusted to 300 µm.

### <Comparative Examples 1 and 2>

Pressure-sensitive adhesive sheets according to Comparative Examples 1 and 2 were obtained in the same manner as in Example 1, except that the amount of the tackifier added was changed to 5 parts by mass and 70 parts by mass, respectively.

### <Comparative Example 3>

A pressure-sensitive adhesive sheet according to Comparative Example 3 was obtained in the same manner as in Example 1, except that an SBS resin D0243 manufactured by Kraton Corporation was used instead of the SBS resin D1155. The content of styrene in the SBS resin D0243 was 24 mass%.

### <Comparative Example 4>

A pressure-sensitive adhesive sheet according to Comparative Example 4 was obtained in the same manner as in Example 1, except that a tackifier T-REZ RB100 manufactured by ENEOS Materials Corporation was used instead of the tackifier ARKON M-115. The softening point measured for T-REZ RB100 by the ring and ball method was 100°C.

### <Comparative Example 5>

A pressure-sensitive adhesive sheet according to Comparative Example 5 was obtained in the same manner as in Example 1, except that a tackifier PENSEL C manufactured by ARAKAWA CHEMICAL INDUSTRIES, LTD. was used instead of the tackifier ARKON M-115. The softening point measured for PENSEL C by the ring and ball method was 120°C.

### <Comparative Example 6>

A pressure-sensitive adhesive sheet according to Comparative Example 6 was obtained in the same manner as in Example 1, except that a tackifier ARKON M90 manufactured by ARAKAWA CHEMICAL INDUSTRIES, LTD. was used instead of the tackifier ARKON M-115. The softening point measured for ARKON M90 by the ring and ball method was 90°C.

### <Comparative Example 7>

A pressure-sensitive adhesive sheet according to Comparative Example 7 was obtained in the same manner as in Example 1, except that an SIS resin Quintac 3433N manufactured by Zeon Corporation was used instead of the SBS resin D1155. The content of styrene in Quintac 3433N was 15 mass%. Quintac is a registered trademark.

### <Comparative Example 8>

A pressure-sensitive adhesive sheet according to Comparative Example 8 was obtained in the same manner as in Example 1, except that the amount of the tackifier added was changed to 100 parts by mass.

### (SP value)

Hildebrand SP values of the SBS resins, the SIS resin, and the tackifiers used in Examples and Comparative Examples were calculated using a calculation software HSPiP. In this calculation, the molecular structures were input in accordance with SMILES, and the calculation was carried out taking into account the compositions of structural units in the SBS resins and the SIS resin. Moreover, the differences D were determined by subtracting the SP values of the tackifiers from the SP values of the SBS resins and the SIS resin. Tables 1 and 2 show the results.

### (Tensile test)

A tensile test was performed using test pieces prepared from the pressure-sensitive adhesive sheets of Examples and Comparative Examples and the SBS resins and the SIS resin used in Examples and Comparative Examples. Each test piece had a shape of a rectangle having a width of 10 mm and a length of 40 mm in plan view. The tensile test was performed at ordinary temperature, a test speed of 1000 mm/min, and a chuck-to-chuck distance of 10 mm. Other conditions of the tensile test were determined according to JIS K 6251. The tensile strength [MPa] and the tensile force F_{A} were determined by the following equations (1) and (2). Tables 1 and 2 show the results. Tensile strength [MPa] = Maximum test force [N] / Cross-sectional area [mm2] of test piece Tensile force FA [N/20 mm] = 20 mm × Thickness [mm] of test piece × Maximum test force [N] / Cross-sectional area [mm2] of test piece

### (Measurement of 90° peel adhesive force)

Test pieces were prepared using the pressure-sensitive adhesive sheets of Examples and Comparative Examples. Each test piece had a shape of a rectangle having a length of 100 mm and a width of 20 mm in plan view. A 50 µm-thick polyethylene terephthalate (PET) film was adhered to one principal surface of this test piece for backing purpose. A foamed body or foam of each of the pressure-sensitive adhesive sheets according to Examples 7 to 10 and a PET backing film were adhered using a double-faced acrylic pressure-sensitive adhesive tape No. 5000NS manufactured by Nitto Denko Corporation. The thus-prepared test piece was placed on a 1.5 mm-thick testing plate made of SUS304, and a 2 kg roller was moved back and forth once over the test piece to adhere the test piece to the testing plate. No load was applied to the test piece after the adhesion of the test piece to the testing plate, and the test piece was peeled off within one minute after the adhesion to measure the initial 90° peel adhesive force Fc according to JIS Z 0237: 2022. The peeling speed was adjusted at 300 mm/min. Tables 1 and 2 show the results.

A peel adhesive force after a durability test was measured in the same manner as for the initial 90° peel adhesive force Fc, except for the flowing points. No load was applied to the test piece after the adhesion of the test piece to the testing plate, and the test piece was stored for seven days in an oven kept at 100°C along with the testing plate. Then, the test piece was taken out of the oven to be cooled at room temperature for one hour, and then the 90° peel adhesive force F_{B} was measured according to JIS Z 0237: 2022. Tables 1 and 2 show the results.

### (Evaluation of collectability of pressure-sensitive adhesive sheet)

Each of the pressure-sensitive adhesive sheets according to Examples and Comparative Examples was placed on a 1.5 mm-thick plate made of SUS304, and a 2 kg roller was moved back and forth once over the pressure-sensitive adhesive sheet to adhere the pressure-sensitive adhesive sheet to the plate. The test piece was stored for seven days in an oven kept at 100°C along with the plate. Then, the test piece was taken out of the oven to be cooled at room temperature for one hour, and then an end portion of the pressure-sensitive adhesive sheet was held by hand and peeled off the plate at approximately 300 mm/min. In this case, the collectability of the pressure-sensitive adhesive sheet was evaluated according to the following criteria. Table 1 shows the results.
OK: The pressure-sensitive adhesive sheet does not rupture, and the pressure-sensitive adhesive of the pressure-sensitive adhesive sheet does not remain on the plate.
Not enough: A rupture of the pressure-sensitive adhesive sheet and/or the pressure-sensitive adhesive thereof remaining on the plate is confirmed.

As shown in Tables 1 and 2, the pressure-sensitive adhesive sheets according to Examples have the following characteristics (a), (b), and (c), and satisfied the requirement that the tensile force F_{A} is greater than the adhesive force F_{B}. Moreover, it has been confirmed that the collectabilities of the pressure-sensitive adhesive sheets according to Examples are better than those of the pressure-sensitive adhesive sheets according to Comparative Examples 2, 3, 6, and 7. These indicate that the pressure-sensitive adhesive sheets according to Examples are easily collected by peeling even after exposed to a high-temperature environment for a long period of time after adhered to an adherend. Additionally, the initial 90° peel adhesive force Fc of each of the pressure-sensitive adhesive sheets according to Examples was not less than 1.0 N/20 mm. The initial adhesive forces of the pressure-sensitive adhesive sheets according to Examples are higher than those of the pressure-sensitive adhesive sheets according to Comparative Examples 1, 4, and 5. This indicates that the pressure-sensitive adhesive sheets according to Examples exhibit favorable adhesive forces from the initial period. **It** is indicated that it is possible to exhibit the given adhesive force from the initial period and achieve the requirement that the tensile force F_{A} is greater than the adhesive force F_{B} according to Examples.
(a) The elastomer (SBS resin) includes 25% or more styrene on a mass basis.
(b) The tackifier has a softening point of 100°C or higher.
(c) The ratio R_{ET} of the mass of the tackifier to the mass of the elastomer is 0.1 to 0.8.

On the other hand, for Comparative Example 1, the ratio R_{ET} is 0.05, and the initial 90° peel adhesive force Fc is small. For Comparative Example 2, the ratio R_{ET} was 0.7, and the requirement that the tensile force F_{A} is greater than the adhesive force F_{B} is not satisfied. For Comparative Example 3, the content of styrene in the SBS resin is 24 mass%, and the requirement that the tensile force F_{A} is greater than the adhesive force F_{B} is not satisfied. For Comparative Examples 4 and 5, the initial 90° peel adhesive force Fc is small. **It** is indicated that, in order for the pressure-sensitive adhesive sheet to exhibit the desired pressure-sensitive adhesiveness, it is important that the difference D of the SP value fall within the given range (e.g., -5.0 MPa^{0.5} or more and 1.5 MPa^{0.5} or less). For Comparative Example 6, the softening point of the tackifier is 90°C, and the requirement that the tensile force F_{A} is greater than the adhesive force F_{B} is not satisfied. For Comparative Example 7, the content of styrene in the SIS resin is 15 mass%, and the requirement that the tensile force F_{A} is greater than the adhesive force F_{B} is not satisfied.

A first aspect of the present invention provides a pressure-sensitive adhesive sheet including:
a pressure-sensitive adhesive layer including: an elastomer including 25% or more styrene on a mass basis; and a tackifier having a softening point of 100°C or higher, wherein
a ratio of a content of the tackifier to a content of the elastomer in the pressure-sensitive adhesive layer is 0.1 to 0.8 on a mass basis,
the pressure-sensitive adhesive sheet satisfies a requirement that a tensile force F_{A} [N/20 mm] is greater than an adhesive force F_{B} [N/20 mm],
the tensile force F_{A} is expressed as F₁·t_{A}·20/S₁, where F₁ is a maximum test force measured in a tensile test of a test piece prepared from the pressure-sensitive adhesive sheet, S₁ [mm²] is a cross-sectional area of the test piece, and t_{A} [mm] is a thickness of the pressure-sensitive adhesive sheet,
the pressure-sensitive adhesive sheet has an adhesive force Fc of not less than 1.0 N/20 mm,
the test piece for the tensile test has a shape of a rectangle having a width of 10 mm and a length of 40 mm in plan view,
a chuck-to-chuck distance in the tensile test is 10 mm,
a test speed in the tensile test is 1000 mm/min,
the adhesive force F_{B} is a 90° peel adhesive force [N/20 mm] measured according to Japanese Industrial Standards (JIS) Z 0237: 2022 by adhering a test piece prepared from the pressure-sensitive adhesive sheet to a testing plate, maintaining an environment temperature of the adhered test piece at 100°C for seven days, and then peeling the test piece from the testing plate, and
the adhesive force Fc is a 90° peel adhesive force [N/20 mm] measured according to Japanese Industrial Standards (JIS) Z 0237: 2022 by adhering a test piece prepared from the pressure-sensitive adhesive sheet to a testing plate and peeling the pressure-sensitive adhesive sheet from the testing plate within one minute after the adhesion.

A second aspect of the present invention provides the pressure-sensitive adhesive sheet according to the first aspect, wherein a difference D obtained by subtracting an SP value of the tackifier from an SP value of the elastomer satisfies a requirement -5.0 MPa^{0.5} ≤ D ≤ 1.5 MPa^{0.5}.

A third aspect of the present invention provides the pressure-sensitive adhesive sheet according to the first or second aspect, wherein the elastomer has a tensile strength of 10 MPa or more.

A fourth aspect of the present invention provides the pressure-sensitive adhesive sheet according to any one of the first to third aspects, wherein the tensile force F_{A} is not less than 10 N/20 mm.

A fifth aspect of the present invention provides the pressure-sensitive adhesive sheet according to any one of the first to fourth aspects, further including a substrate being a foamed body, wherein
the pressure-sensitive adhesive layer is disposed on the substrate.

**[Table 1]**

| | | Example 1 | Example 2 | Example 3 | Example 4 | Example 5 | Example 6 |
|---|---|---|---|---|---|---|---|
| Elastomer | Type | SBS | SBS | SBS | SBS | SBS | SBS |
| | Content [parts by mass] | 100 | 100 | 100 | 100 | 100 | 100 |
| | Content of styrene [mass%] | 40 | 40 | 40 | 40 | 43 | 43 |
| | SP value [MPa^{0.5}] | 18.1 | 18.1 | 18.1 | 18.1 | 18.2 | 18.2 |
| | Tensile strength [MPa] | 20.5 | 20.5 | 20.5 | 12.8 | 27.9 | 27.9 |
| Tackifier | Content [parts by mass] | 35 | 10 | 50 | 35 | 35 | 40 |
| | Softening point [°C] | 115 | 115 | 115 | 115 | 115 | 115 |
| | SP value [MPa^{0.5}] | 19.8 | 19.8 | 19.8 | 19.8 | 19.8 | 19.8 |
| Filler | Content [parts by mass] | 0 | 0 | 0 | 0 | 0 | 35 |
| Substrate | | N/A | N/A | N/A | N/A | N/A | N/A |
| Pressure-sensitive adhesive sheet | Thickness [µm] | 100 | 100 | 100 | 300 | 100 | 100 |
| | SP difference D [MPa^{0.5}] | -1.7 | -1.7 | -1.7 | -1.7 | -1.6 | -1.6 |
| | Tensile strength [MPa] | 28.5 | 20.6 | 16.6 | 12.6 | 24.5 | 18.7 |
| | Tensile force F_{A} [N/20 mm] | 57.0 | 41.2 | 33.2 | 75.6 | 49.0 | 37.4 |
| | Adhesive force F_{B} [N/20 mm] | 36.0 | 17.3 | 31.7 | 65.9 | 31.0 | 35.0 |
| | Adhesive force F_{C} [N/20 mm] | 19.8 | 1.2 | 25.9 | 16.9 | 21.3 | 14.8 |
| | Evaluation of collectability | OK | OK | OK | OK | OK | OK |

| | | Example 7 | Example 8 | Example 9 | Example 10 | Example 11 | |
|---|---|---|---|---|---|---|---|
| Elastomer | Type | SBS | SBS | SBS | SBS | SBS | |
| | Content [parts by mass] | 100 | 100 | 100 | 100 | 100 | |
| | Content of styrene [mass%] | 40 | 40 | 40 | 40 | 40 | |
| | SP value [MPa^{0.5}] | 18.1 | 18.1 | 18.1 | 18.1 | 18.1 | |
| | Tensile strength [MPa] | 20.5 | 20.5 | 20.5 | 20.5 | 20.5 | |
| Tackifier | Content [parts by mass] | 35 | 35 | 35 | 35 | 70 | |
| | Softening point [°C] | 115 | 115 | 115 | 115 | 115 | |
| | SP value [MPa^{0.5}] | 19.8 | 19.8 | 19.8 | 19.8 | 19.8 | |
| Filler | Content [parts by mass] | 0 | 0 | 0 | 0 | 0 | |
| Substrate | | Foamed EPDM body | Urethane foam | Silicone foam | Acrylic foam | N/A | |
| Pressure-sensitive adhesive sheet | Thickness [µm] | 100 | 100 | 100 | 100 | 300 | |
| | SP difference D [MPa^{0.5}] | -1.7 | -1.7 | -1.7 | -1.7 | -1.7 | |
| | Tensile strength [MPa] | 28.5 | 28.5 | 28.5 | 28.5 | 14.1 | |
| | Tensile force F_{A} [N/20 mm] | 57.0 | 57.0 | 57.0 | 57.0 | 84.6 | |
| | Adhesive force F_{B} [N/20 mm] | 36.0 | 36.0 | 36.0 | 36.0 | 58.3 | |
| | Adhesive force F_{C} [N/20 mm] | 19.8 | 19.8 | 19.8 | 19.8 | 31.9 | |
| | Evaluation of collectability | OK | OK | OK | OK | OK | |

**[Table 2]**

| | | Comparative Example 1 | Comparative Example 2 | Comparative Example 3 | Comparative Example 4 |
|---|---|---|---|---|---|
| Elastomer | Type | SBS | SBS | SBS | SBS |
| | Content [parts by mass] | 100 | 100 | 100 | 100 |
| | Content of styrene [mass%] | 40 | 40 | 24 | 40 |
| | SP value [MPa^{0.5}] | 18.1 | 18.1 | 17.7 | 18.1 |
| | Tensile strength [MPa] | 20.5 | 20.5 | 16 | 20.5 |
| Tackifier | Content [parts by mass] | 5 | 70 | 35 | 35 |
| | Softening point [°C] | 115 | 115 | 115 | 100 |
| | SP value [MPa^{0.5}] | 19.8 | 19.8 | 19.8 | 16.3 |
| Filler | Content [parts by mass] | 0 | 0 | 0 | 0 |
| Substrate | | N/A | N/A | N/A | N/A |
| Pressure-sensitive adhesive sheet | Thickness [µm] | 100 | 100 | 100 | 100 |
| | SP difference D [MPa^{0.5}] | -1.7 | -1.7 | -2.1 | 1.8 |
| | Tensile strength [MPa] | 22.7 | 14.1 | 4.1 | 21.5 |
| | Tensile force F_{A} [N/20 mm] | 45.4 | 28.2 | 8.2 | 43.0 |
| | Adhesive force F_{B} [N/20 mm] | 16.9 | 58.3 | 48.5 | 3.0 |
| | Adhesive force F_{C} [N/20 mm] | 0.5 | 31.9 | 21.3 | 0.2 |
| | Evaluation of collectability | OK | Not enough | Not enough | OK |

| | | Comparative Example 5 | Comparative Example 6 | Comparative Example 7 | Comparative Example 8 |
|---|---|---|---|---|---|
| Elastomer | Type | SBS | SBS | SIS | SBS |
| | Content [parts by mass] | 100 | 100 | 100 | 100 |
| | Content of styrene [mass%] | 43 | 43 | 15 | 40 |
| | SP value [MPa] | 18.1 | 18.1 | 17.6 | 18.1 |
| | Tensile strength [MPa] | 20.5 | 27.9 | 2 | 20.5 |
| Tackifier | Content [parts by mass] | 35 | 35 | 35 | 100 |
| | Softening point [°C] | 120 | 90 | 115 | 115 |
| | SP value [MPa^{0.5}] | 23.5 | 19.8 | 19.8 | 19.8 |
| Filler | Content [parts by mass] | 0 | 0 | 0 | 0 |
| Substrate | | N/A | N/A | N/A | N/A |
| Pressure-sensitive adhesive sheet | Thickness [µm] | 100 | 100 | 100 | 100 |
| | SP difference D [MPa^{0.5}] | -5.4 | -1.7 | -2.2 | -1.7 |
| | Tensile strength [MPa] | 19.4 | 17.6 | 4.3 | 12.6 |
| | Tensile force F_{A} [N/20 mm] | 38.8 | 35.2 | 8.6 | 25.2 |
| | Adhesive force F_{B} [N/20 mm] | 9.1 | 38.2 | 31.0 | 74.7 |
| | Adhesive force Fc [N/20 mm] | 0.6 | 15.4 | 26.6 | 54.6 |
| | Evaluation of collectability | OK | Not enough | Not enough | Not enough |

## Claims

1. A pressure-sensitive adhesive sheet comprising
a pressure-sensitive adhesive layer including: an elastomer including 25% or more styrene on a mass basis; and a tackifier having a softening point of 100°C or higher, wherein
a ratio of a content of the tackifier to a content of the elastomer in the pressure-sensitive adhesive layer is 0.1 to 0.8 on a mass basis,
the pressure-sensitive adhesive sheet satisfies a requirement that a tensile force F_{A} [N/20 mm] is greater than an adhesive force F_{B} [N/20 mm],
the tensile force F_{A} is expressed as F₁·t_{A}·20/S₁, where F₁ is a maximum test force measured in a tensile test of a test piece prepared from the pressure-sensitive adhesive sheet, S₁ [mm²] is a cross-sectional area of the test piece, and t_{A} [mm] is a thickness of the pressure-sensitive adhesive sheet,
the pressure-sensitive adhesive sheet has an adhesive force Fc of not less than 1.0 N/20 mm,
the test piece for the tensile test has a shape of a rectangle having a width of 10 mm and a length of 40 mm in plan view,
a chuck-to-chuck distance in the tensile test is 10 mm,
a test speed in the tensile test is 1000 mm/min,
the adhesive force F_{B} is a 90° peel adhesive force [N/20 mm] measured according to Japanese Industrial Standards (JIS) Z 0237: 2022 by adhering a test piece prepared from the pressure-sensitive adhesive sheet to a testing plate, maintaining an environment temperature of the adhered test piece at 100°C for seven days, and then peeling the test piece from the testing plate, and
the adhesive force Fc is a 90° peel adhesive force [N/20 mm] measured according to Japanese Industrial Standards (JIS) Z 0237: 2022 by adhering a test piece prepared from the pressure-sensitive adhesive sheet to a testing plate and peeling the pressure-sensitive adhesive sheet from the testing plate within one minute after the adhesion.

2. The pressure-sensitive adhesive sheet according to claim 1, wherein a difference D obtained by subtracting an SP value of the tackifier from an SP value of the elastomer satisfies a requirement -5.0 MPa^{0.5} ≤ D ≤ 1.5 MPa^{0.5}.

3. The pressure-sensitive adhesive sheet according to claim 1, wherein the elastomer has a tensile strength of 10 MPa or more.

4. The pressure-sensitive adhesive sheet according to claim 1, wherein the tensile force F_{A} is not less than 10 N/20 mm.

5. The pressure-sensitive adhesive sheet according to claim 1, further comprising a substrate being a foamed body, wherein
the pressure-sensitive adhesive layer is disposed on the substrate.
